# EUROPEAN PATENT SPECIFICATION

(11) **EP 3 395 180 B1**
(45) Date of publication and mention of the grant of the patent: **02.09.2020**
(21) Application number: 18169885.3
(22) Date of filing: 27.04.2018
(51) Int. Cl.: A23G 1/21, A23G 3/02, B29C 41/06

(54) **MOULDING MACHINE WITH ADJUSTMENT DEVICE FOR USING DIFFERENT DIMENSIONS OF DIES**
FORMMASCHINE MIT VERSTELLVORRICHTUNG ZUR VERWENDUNG UNTERSCHIEDLICHER ABMESSUNGEN VON MATRIZEN
MACHINE DE MOULAGE COMPORTANT UN DISPOSITIF DE RÉGLAGE POUR UTILISER DIFFÉRENTES DIMENSIONS DE MATRICES

(30) Priority: 27.04.2017 IT 201700046051
(43) Date of publication of application: 31.10.2018
(73) Proprietor: SACMI PACKAGING & CHOCOLATE S.P.A., 40026 Imola (BO) (IT)
(72) Inventor: Fontana, Gianluca, I-12051 ALBA (CN) (IT); Lumini, Franco, I-20135 MILANO (MI) (IT)
(74) Representative: Negrini, Elena

(56) References cited:
- EP-A2- 0 266 100
- DE-A1- 3 005 838
- US-A- 2 108 067
- US-A- 3 117 346
- US-A- 3 677 670

## Description

The present invention is in the field concerning the moulding of matter in the molten state into solid products, and relates to a die-size change device for a moulding machine, e.g., of the "spinning" or "rotational" type, or the like, and specifically for dies suitable for the moulding of seamless, hollow food items made of chocolate or substitutes thereof, or of other fat matters.

There are known machines provided with conveyors, e.g., ring-shaped, for supports equipped witb rotating housings assigned to house dies consisting of pairs of half-shells or of half-dies matching with, and facing, each other, whose internal hollow moulds are previously filled, in part, with some stuff, e.g., food stuff, such as chocolate, at a liquefying temperature of the stuff itself.

The rotating supports, and hence the dies, are rotated around one orthogonal axis, preferably two orthogonal axes, and such rotation distributes the chocolate, or other food stuff to be moulded, on the internal surfaces of the half-shell moulds of the dies. During the translation of the supports, chocolate cools down and solidifies, and, once it is sufficienctly hardened, the dies are removed from the housings, and are further cooled down in a static position prior to the separation or opening of their half-shells or shells for the removal of the hollow chocolate products thus moulded. Subsequently, the pairs of die half-shells are partly filled with molten chocolate, and are closed so as to form the die, whereby the latter is then placed within the pliers or housings for a new cycle.

The support housings are each equipped with two horizontal planes assigned to match with the main outer faces of the respective die, thus sealing the half-shells thereof and mutually blocking them during both transport and rotation.

Such known machines are used for making hollow products having different shapes, such as, for example, egg-shaped, ball-shaped, animal-shaped, spruce-shaped or father Christmas-shaped hollow products, even of very different sizes. Closed dies are generally shaped as a parallelepiped, with its three dimensions determining the size thereof; the measures of such three dimensions define the so-called die "size", the latter including, for example, the lengths of the two sides adjacent to the main faces of the die, and the thickness, i.e., the distance between said main faces.

Document US 3 117 346 A discloses a moulding machine having an adjustment device assigned to allow the use of dies of different thicknesses; said machine comprises a plurality of supports, each of them being equipped with pliers means provided with a first jaw means and a second jaw means which are nearly flat and assigned to clamp a die means. The known adjustment device comprises, for each support, a slide seat means fixed to the support itself and assigned to the axial sliding of a respective rectilinear column means; and comprises a block means fixed to the slide seat means, to block the sliding of the column means. The first jaw means is fixed to the support, and the second end of the column means protrudes outside from the slide seat means and the block means.

Document US 2108067 A discloses another moulding machine.

A drawback of said known machines is that the rotating housings with which such machines are equipped may house dies having a single, predetermined thickness. This implies that the known machines may use die sizes having a single thickness, unless the housings of all supports are substituted, which is very labour-, cost- and time-intensive. An object of the present invention is to provide a moulding machine having supports equipped with adjustable housings, to house dies having sizes of even very different thicknesses.

A further object is to provide a machine having a device for adjusting the housings, to use dies of different sizes.

Another object is to provide a machine equipped with an automatic adjustment device, to use dies of different sizes.

A further object is to provide a machine equipped with an automatic device capable of carrying out an in-line adjustment, i.e., an adjustment during the translation of the supports along the conveyor.

These objects are achieved by an apparatus according to claim 1. Further optional embodiments also belonging to the invention are described in the dependent claims.

The features of the invention are highlighted hereinbelow, with specific reference to the accompanying drawings, in which:
- Figure 1 shows an axonometric, schematic, partial view of the moulding machine with an adjustment means, to use dies of different sizes, subjects-matter of the present invention;
- Figure 2 shows an axonometric, partial view of some components of the device of the machine of Figure 1;
- Figures 3, 4 and 5 show a support of the machine of Figure 1, containing a die means of a size having a huge thickness, in a side view, in a section view along plane IV - IV of Figure 3 and in an axonometric view, respectively;
- Figures 6, 7 and 8 show a support of the machine of Figure 1 containing a die means of a size having a thickness which is smaller than that of Figure 3, in a side view, in a section view along plane VII - VII of Figure 6 and in an axonometric view, respectively;
- Figures 9, 10 and 11 show an enlarged element of Figure 3, in an axonometric view, in a side view and in a section view along plane XI - XI of Figure 10, respectively;
- Figure 12 shows an enlarged, side view of the activation means and of the rail means of Figure 1;
- Figure 13 shows a top view of the activation means of Figure 12;
- Figure 14 shows an enlarged, side view of the activation means of Figure 12, in an adjusting step of the element of Figure 9;
- Figure 15 shows an enlarged top view of the activation means of Figure 13, in an adjusting step of the element of Figure 9.

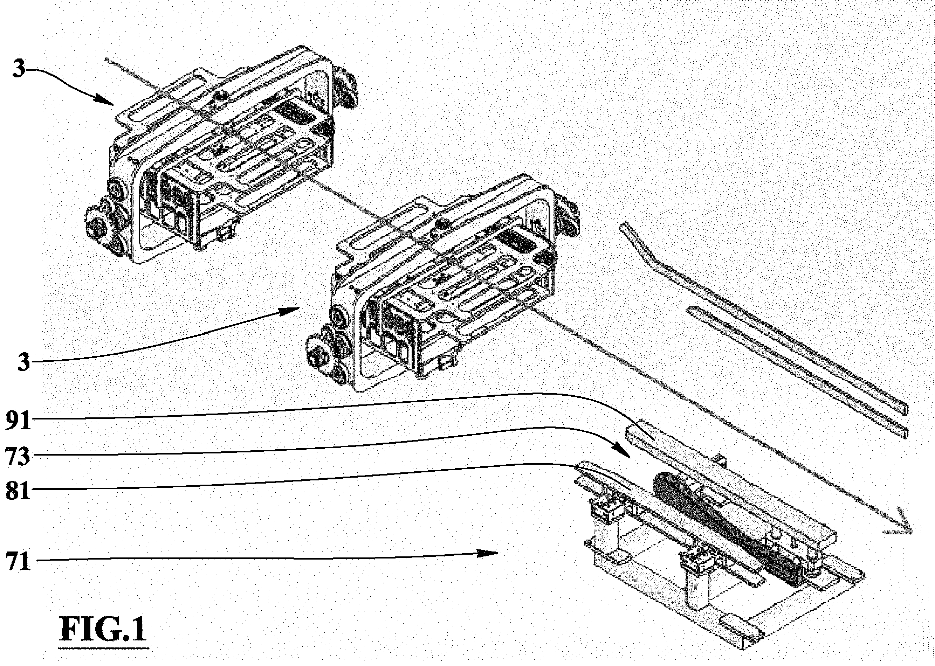

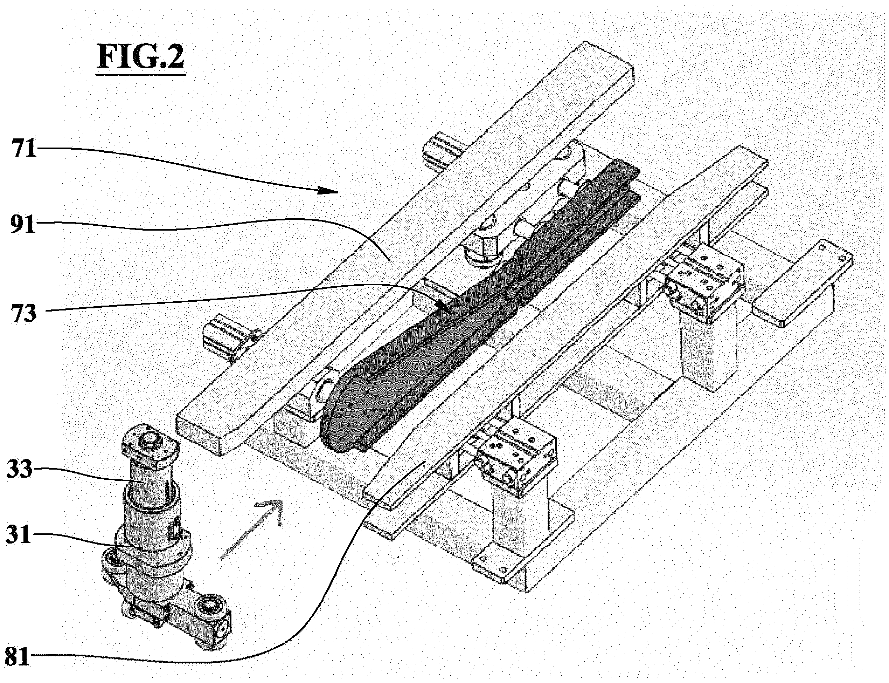

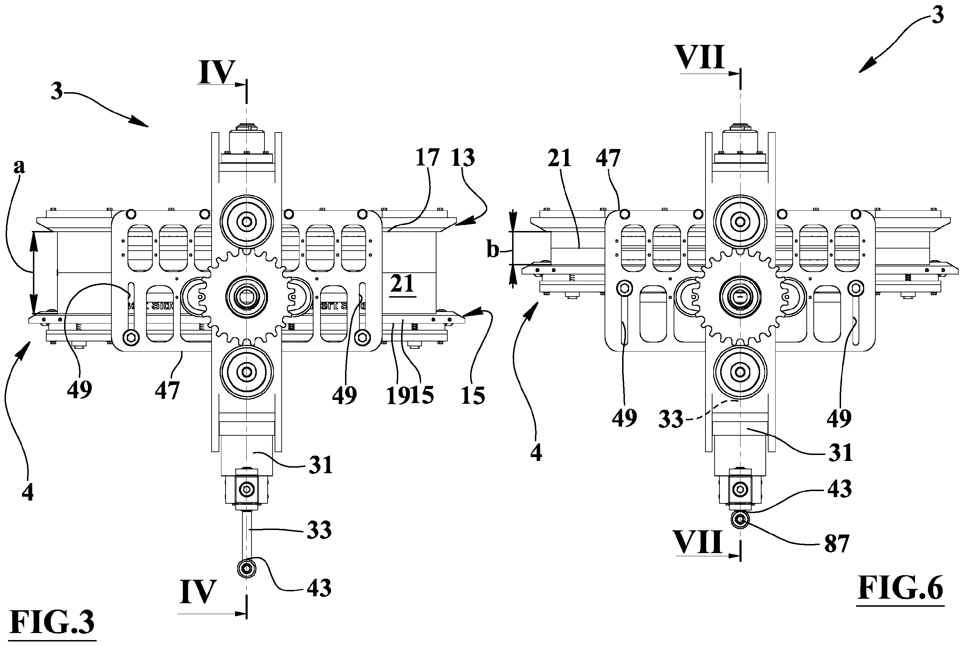

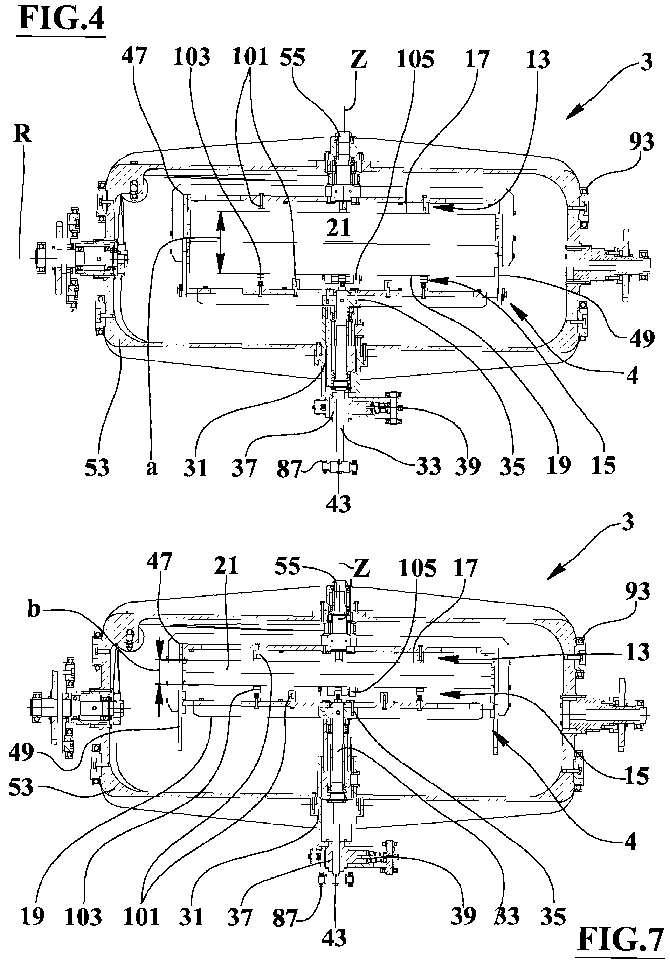

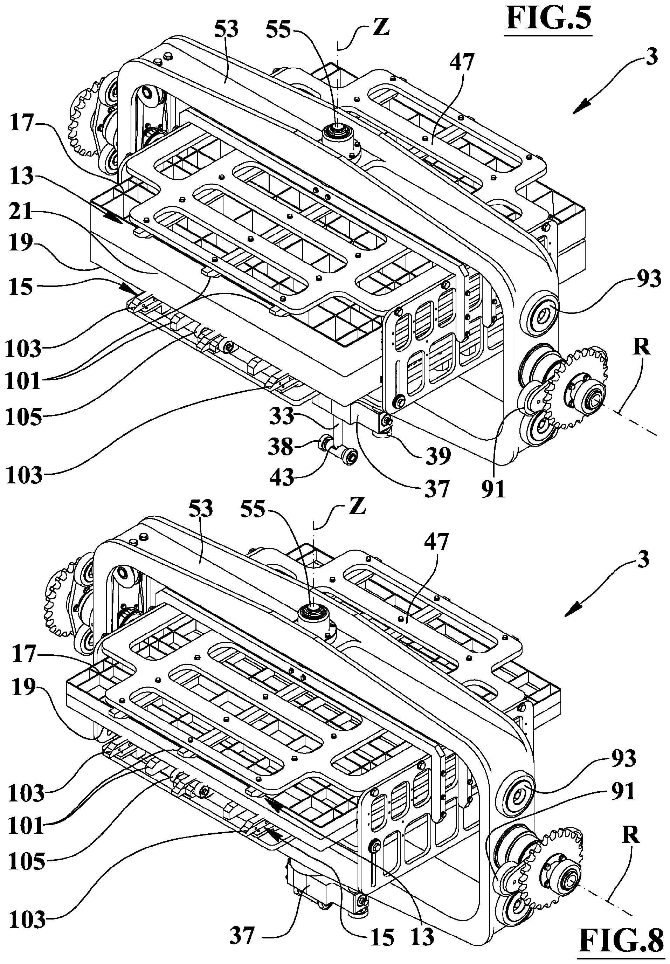

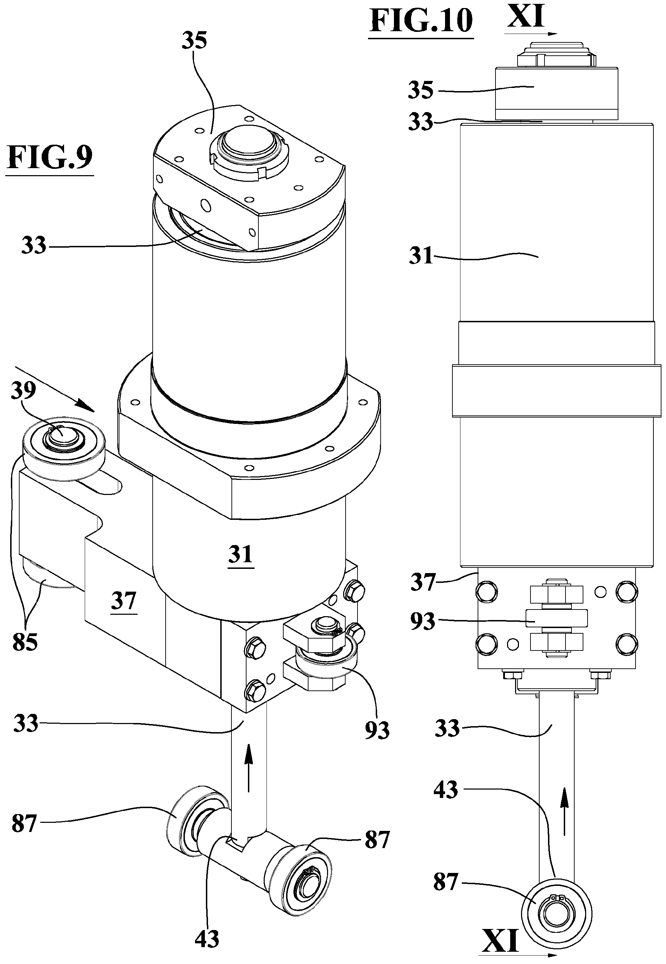

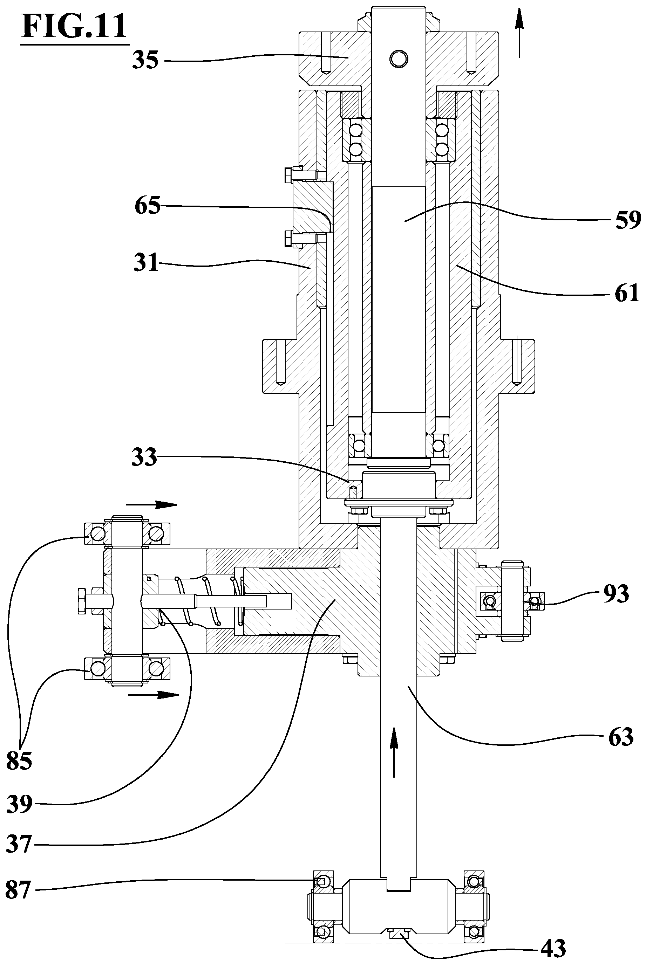

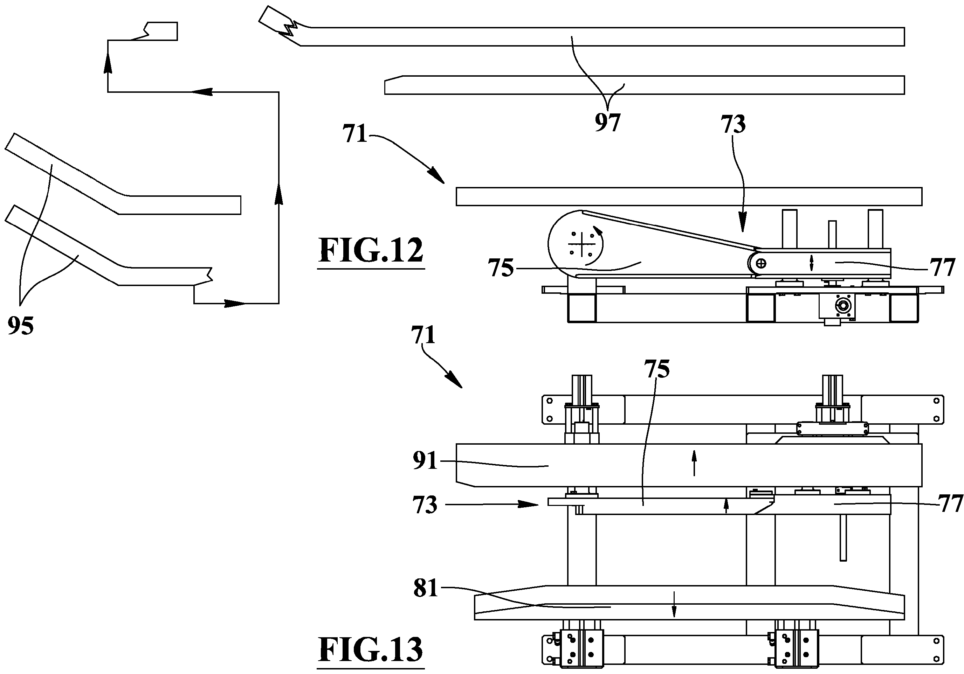

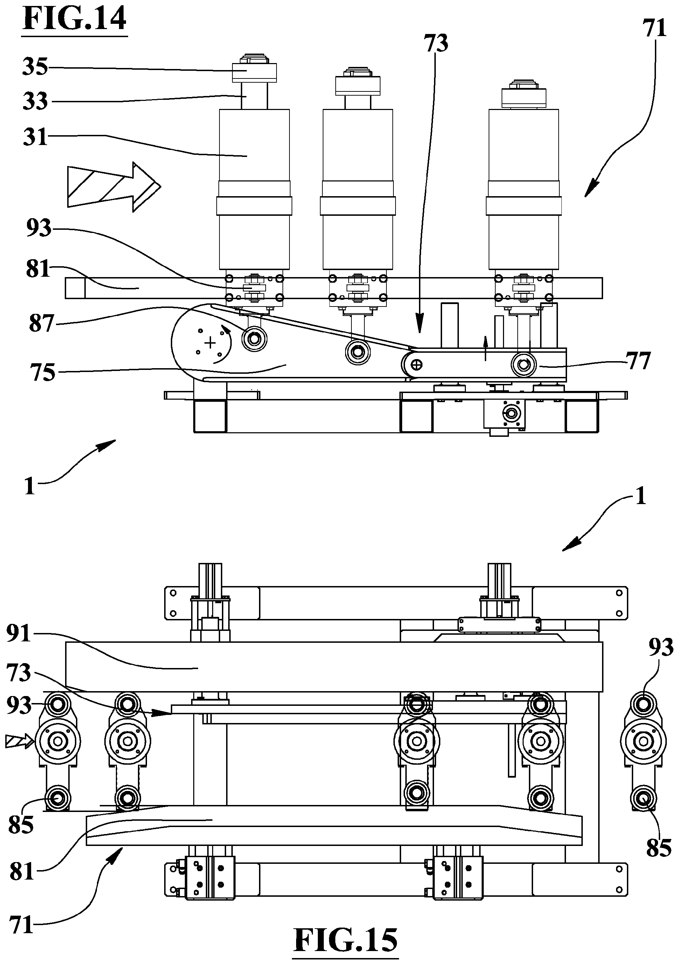

Referring to Figures 1-15, numeral 1 denotes the moulding machine with an adjustment device, to use die means 21 of different sizes, subjects-matter of the present invention. The die means 21 contain a plurality of hollow moulds for the moulding of hollow products, such as food products, and may consist of two parts or multiple shells which are approximately symmetrical; each part of the die means bears an approximate half of each mould. Alternatively, the die means may consist of more than two parts.

In their closed condition, in which the elements are in mutual contact, and the internal moulds are complete, the die means feature two main external lateral faces, mutually parallel and distanced from each other at a distance corresponding to the height or thickness a, b of the die means. Such height or thickness a, b (hereinafter referred to as 'thickness') defines or helps define the so-called size of the die means. Hereinafter, the term 'size' shall be used with regard to the thickness a, b of the corresponding die.

The moulding machine comprises a conveyor, e.g., of the chain type and of other known types, assigned to move - along a ring-shaped or closed path - a plurality of supports 3 which are regularly distanced and connected to the conveyor itself.

Each support comprises, starting from its inner part: a housing, hereinafter referred to as pliers means 4, assigned to house the die means 21. The pliers means 4 is fixed to, and contained in, a first framework means 47, the latter, in turn, being contained in, and connected to, a second framework means 53 which forms the outer portion of the corresponding support 3.

The first framework means 47 may be in the form of a sheet or of a tubular element which is rectangular in cross section, or preferably, and as shown in the Figures, in the form of an element having a cross section shaped as a squared, enlarged "U" comprising a middle sheet and two lateral sheets fixed perpendicular to the edges of the middle sheet. The connection among the three sheets, which are perforated, may be reinforced by means of one or more external ribs or frames which are shaped as a squared, enlarged "U".

Preferably, the second framework means 53 is in the form of a rectangular, elongated monolithic frame, or in the form of a tubular element which is rectangular and elongated in cross section. The second framework means is so dimensioned as to allow the first framework means to freely rotate around a rotation axis Z which coincides with the median geometric axis of the major sides and faces of the second framework means.

Each pliers means is provided with at least one first plane or one first jaw means 13 and with one second plane or one second jaw means 15 (hereinafter referred to as first and second jaw means) which are nearly flat or define respective matching planes mutually facing each other and parallel to each other.

The first 13 and second 15 jaw means are assigned to match with, and clamp, corresponding main faces 17, 19 of a die means 21, whereby as seen above, each of the latter comprises at least two half-dies or shells bearing respective mould portions assigned to mould chocolate products or products in other materials.

Alternatively, the first 13 and second jaw means 15 of a pliers means 4 may house a set of overlapping and/or flanking die means.

Each die means 21 has a predetermined thickness a, b which depends on the respective size.

The adjustment device 1 comprises, for each support 3 of the machine, at least:
- a slide seat means 31 fixed to the support 3 itself, or, more specifically, to a major face or side of the second framework means 53 of the support 3, wherein such slide seat means 31 has a cylindrical tubular shape, and is assigned to the axial sliding of a respective column means 33 which is rectilinear and perpendicular to the plane of the corresponding second jaw means 15 to which its first end 35 is fixed;
- a reversible block means 37, of a known type, fixed to the slide seat means 31 and engaged by a cylindrical portion of the column means 33, to lock or unlock, by means of its unlocking drive 39, the sliding of such column means 33 along the slide seat means 31.

The first jaw means 13 is fixed to the support 3 or, more specifically, is fixed to, or is integrated with, the middle sheet of the first framework means 47 of the support 3.

The second end 43 of the column means 33, opposed to the first end 35, protrudes outside from the slide seat means 31 and the block means 37; in an adjustment condition, in which the unlocking drive 39 is activated to allow the sliding of the column means 33, such second end 43 may be axially translated, to axially movr the column means 33, and thus the second jaw means 15, such that it is possible to adjust the distance between the latter 15 and the first jaw means 13 until a distance between them 13, 15 is reached, which corresponds to the thickness a, b of the new size of the die means 21. In the other conditions of the machine and of the device, in which the unlocking drive 39 is deactivated and left in its stable condition, the block means 37 clamps the column means 33 thus locking it and preventing its axial translation.

The two lateral sheets of the first framework means 47 are parallel to each other and parallel to the column means, and bear respective sets of sliding means 49, e.g., consisting of elongated slots which are parallel to the column means 33 assigned to the sliding of connections, for example consisting of pins or screw shafts, of the second jaw means 15.

The second framework means 53 rotates around its rotation axis R which coincides with the median geometric axis of the minor sides or faces of the second framework means itself, and such rotation axis R is perpendicular to the axis of rotation Z of the first framework means 47.

The second framework means 53 is connected to the first framework means 47 by means of an intermediate rotation shaft 55 defining the rotation axis Z of the first framework means 47, and is thus perpendicular to the rotation axis R of the second framework means 53. Such intermediate rotation shaft 55 is coaxial with the column means 33, and cooperates with the latter so as to allow the rotation of the first framework means 47.

The column means 33 is of such a type that it transmits axial forces and movements, but does not transmit axial pairs and rotations; to this end, the column means 33 is equipped with a first portion 59, preferably cylindrical, having its first end 35 fixed to the second jaw means 15, of a tubular seat 61 with a cylindrical cavity; and with a second portion 63 arranged externally with respect to the first portion 59 and to the tubular seat 61. Such second portion 63 is cylindrical, and passes through the block means 37 that acts thereon and on its extenal end, i.e., in all conditions, the second end 43 of the column means 33 protrudes from the slide seat 31 and the block means 37.

The first portion 59 is mounted, by means of bearings, in the internal cavity of the tubular seat 61, and thus freely rotate around its own axis. The end of such tubulat seat 61, opposed to the first end 35 of the column means 33, is fixed to the second portion 63 of the column means 33, and is aligned with the first one 59.

The tubular slide seat means 31 slidingly houses the first 59 and second 63 portions and the tubular seat 61 of the column means 33, and it 31 is equipped with an outer flange to be fixed to the edges of a pass-through opening of the second framework means 53.

The slide seat means 31 and the tubular seat 61 are equipped with anti-mutual rotation sliding means 65 consisting, for example, of a small key fixed to the slide seat means 31 and sliding within a longitudinal groove made in the tubular seat 61.

The size adjustment may be carried out manually by acting on the unlocking drive 39 of the block means 37 and on the second end 43 of the column means 33 by means of appropriate tools, thus saving a lot of time as compared to the known machines.

Preferably, the adjustment occurs automatically and in line, i.e., with the supports 3 moved by the conveyor.

To this end, downstream of an area of the conveyor for the unloading of the die means 21 and upstream of an area for the introduction of the die means 21, within the pliers means of each support 3, the device 1 comprises an activation means 71 for the column means 33, and a block means 37 of each support 3.

Such activation means 71 comprises at least one first cam means 73 equipped with a truncated cone-shaped mouth 75, whose minor basis is connected with a linear adjustment segment 77 located downstream of the mouth 75, parallel to the path of the conveyor and movable while approaching and leaving such path.

The activation means 71 comprises a second linear cam means 81 parallel to said path and whose front and rear operative ends precede the corresponding ends of the first cam means 73 with respect to the movement of the supports 3 along the conveyor.

In an adjustment condition, the second cam means 81 is assigned to match with first rolling means 85 of the unlocking drive 39 of the block means 37 of a running support 3, to unlock the respective column means 33.

The mouth and the adjustment segment of the first cam means 73 are assigned to match with second rolling means 87 fixed to the second end 43 of the column means 33 of the running support, to translate the second jaw means 15 at a distance from the first one 13, which corresponds to the thickness a, b of a die means 21 of a desired size.

At the end of the translation of the second jaw means 15 and of the size adjustment, the detachment of the first rolling means 85 from the second cam means 81 locks the column means 33 by fixing it at a thickness a, b, thus achieving an arrangement for the desired size.

In order to avoid that the matching of the first rolling means 85 with the second cam means 81 causes lateral oscillations and inclinations of the support 3, the activation means 71 comprises a third linear cam means 91 facing the second cam means 81 and protruding from both ends of the latter; such third cam means 91 is assigned to match with third rolling means 93 fixed to the block means 37 and counterposed to the first rolling means 85, thus counteracting and balancing the matching force between such first rolling means 85 and the second cam means 81.

The rotation axes of the first rolling means 85 and of the third rolling means 93, consisting of small wheels or bearings, are parallel to the column means 33, and the rotation axes of the second rolling means 87 are perpendicular to the column means 33.

The mouth 75 of the first cam means 73 has a front portion having a width sufficient to house the second rolling means 87 in any condition of adjustment, and is centrally hinged to a framework of the activation means 71.

The rear portion of the mouth 75 is articulated, for example by means of a slot-pin coupling to the front end of the adjustment segment 77 which is connected to said framework by means of actuator adjustment means approaching and leaving the pliers means.

The cross sections of the mouth and of the adjustment segment of the first cam means 73 are shaped as an elongated "C", and thus such mouth and such adjustment segment have protruding longitudinal edges which are parallel to the rotation axis of the second rolling means 87, and inclined and perpendicular to the column means 33, respectively. These protruding longitudinal edges are assigned to a rolling matching thereof witb the small wheels or bearings of the second rolling means 87; in particular, the protruding longitudinal edges of the mouth 75 serve as inclined planes for the translation of the column means 33, and the protruding longitudinal edges of the adjustment segment 77, parallel to the trajectory imposed to the support 3 by the conveyor, maintain the desired position of the column means 33 until the block means 37 completes the clamping and locking of the column means itself.

The second cam means 81 and the third cam means 91 have respective rolling surfaces matching with the first rolling means 85 and with third rolling means 93, wherein such surfaces are parallel to the rotation axes of the first 85 and third 93 rolling means. The second cam means 81 and the corresponding first rolling means 85 may be split, i.e., may consist of two rails and of a pair of small wheels or bearings. The ends of the second cam means 81 feature inclined planes to translate the first rolling means 85, and the ends of the third cam means 91 may be rounded to facilitate the matching thereof with the third rolling means 93.

The first 73, second 81 and third 91 cam means are connected to the framework of the activation means 71 by means of lateral movement means assigned to translate such cam means 73, 81, 91 to place them in engagement and disengagement conditions with the corresponding second 87, first 85 and third 93 rolling means, respectively, for the adjustment of the size, and for the normal operation of the machine where such an engagement is to be avoided.

The second framework means 53 has a set of orientation rolling means 91, 93 with respective rotation axes parallel to the rotation axis R of the second framework means 53, and the device 1 is equipped with a set of rail means 95, 97 assigned to match with the orientation rolling means 91, 93 of the support 3 translating upstream of the activation means 71, to rotate the second framework means 53 until the first rolling means 85 and the second rolling means 87 are aligned with the first cam means 73 and with the second cam means 81.

Each pair of rolling means and rail means 95, 97 carries out a 90° rotation of the second framework means 53, and the number and arrangement thereof depends on the predetermined orientation of the second framework means 53 after the removal of the die, and on the orientation of the second framework means 53, and thus of the column means necessary for a sliding matching with the activation means 71. The rectilinear lengths, parallel to said trajectory of the rail means 95, 97, may extend themselves also along the longitudinal development of the activation means 71 to stabilise the support 3 during the adjustment of the size and to regularise its motion .

The first jaw means 13 comprises a set of rigid rectilinear guides 101 which are parallel to each other and to the direction of insertion or removal of the die means, rigidly fixed to the middle sheet of the first framework means 47.

The second jaw means 15 comprises a plate which is fixed in the middle to a first end 35 of the column means 33, and on the sides has connections that slide in the slots if the sliding means 49. The second jaw means 15 is equipped with a set of rigid rectilinear guides 101, which are rigidly fixed to such plate and interposed by a set of hanging rectilinear guides 103 elastically fixed to the plate, and the middle portion of the entrance edge of its plate is equipped with wheel means 105 elastically or rigidly fixed to the plate itself.

In the operative condition, wherein the support 3 bears a respective die means 21, these guides 101, 103 and wheel means 105 define the planes of the first 13 and second 15 jaw means, virtually coinciding with the planes of the main faces of the die means 21.

When operating the machine, it is provided that the actuator adjustment means approaching or leaving the pliers means of the adjustment segment 77 of the first cam means 73 is operated to arrange the first cam means 73 in a position corresponding to the desired size. The operation of the lateral moving means translates the cam means 73, 81, 91 to a condition under which it is engaged with corresponding second 87, first 85 and third 93 rolling means. Upon the passage of a support 3, the several matching means carry out the following sequence of operations, for example:
- beginning of the cross stabilisation of the support;
- actuation of the unlocking drive 39 to allow the sliding of the column means 33 and maintenance of this actuated condition for the sliding;
- sliding translation of the second end 43 of the column means 33 to carry out and maintain the adjustment and the desired size;
- release of the unlocking drive 39 to lock the column means 33 and fix the size;
- release of the second end 43;
- end of the cross stabilisation of the support.

## Claims

1. Moulding machine with an adjustment device (1) assigned to allow the use of dies of different thicknesses, said machine comprising at least a conveyor for a plurality of supports (3); each support (3) is equipped with plier means provided at least with a first jaw means (13) and with a second jaws means (15), both flat or defining respective planes, facing each other and parallel to each other, and assigned to match with, and clamp, corresponding main faces (17, 19) of at least one die means (21) having a predetermined thickness (a, b); the adjustment device (1) comprising, for each support (3), at least:
- a slide seat means (31) fixed to the support (3) itself and assigned to the axial sliding of a respective column means (33) which is rectilinear and perpendicular to the plane of a corresponding second jaw means (15) to which its first end (35) is fixed;
- a reversible block means (37) fixed to the slide seat means (31) and engaged by a portion of the column means (33);
said machine further comprising an unlocking drive (39) of the block means (37) to lock or unlock the sliding of such column means (33) along the slide seat means (31),
wherein the first jaw means (13) is fixed to the support (3) and the second end (43) of the column means (33), opposed to its first end (35), protrudes outside from the slide seat means (31) and the block means (37); such that in an adjustment condition, in which the support (3) is devoid of the die means (21) and the unlocking drive (39) is actuated to allow the sliding of the column means (33) along the block means (37) and the slide seat means (31), the column means (33) can be axially translated to move the second jaw means (15) thus setting the distance between the latter (15) and the first jaw means (13) until a distance between them (13, 15) is reached, which corresponds to the thickness (b, a) of the new size of the die means (21) and until said distance is fixed by actuating the unlocking drive (39) to lock the column means (33) by means of the block means (37). wherein downstream of an area of the conveyor for the unloading of the die means (21) and upstream of an area for the introduction of the die means (21), within the pliers means of each support (3), the device (1) comprises an activation means (71) for the column means (33), and a block means (37) of each support (3), wherein such activation means (71) comprises at least one first cam means (73) equipped with a mouth (75), connected with a linear adjustment segment (77) located downstream of the mouth (75), parallel to the path of the conveyor and movable while approaching and leaving such path; and it comprises a second linear cam means (81) parallel to said path and whose operative front and rear ends precede the corresponding ends of the first cam means (73) with respect to the movement of the supports (3) along the conveyor; wherein in an adjustment condition, the second cam means (81) is assigned to match with first rolling means (85) of the unlocking drive (39) of the block means (37) of a running support (3) to unlock the respective column means (33); the mouth and the adjustment segment of the first cam means (73) are assigned to match with second rolling means (87) fixed to the second end (43) of the column means (33) of the running support to translate the second jaw means (15) at a distance from the first one (13), which corresponds to the thickness (a, b) of a die means of a desired size (21); the detachment of the first rolling means (85) from the second cam means (81) locks the column means (33) by fixing it to the desired thickness.

2. Machine according to claim 1 **characterized in that** the support (3) comprises at least one first framework means (47) to which the first jaw means (13) is fixed, and it (47) is equipped with a set of sliding means (49) parallel to the column means (33) and assigned to the sliding of connections of the second jaw means (15); such support means (3) comprise a second framework means (53) which can rotate around a respective rotation axis (R) and it (53) contains the first framework means (47) to which it is connected at least by means of an intermediate rotation shaft (55) perpendicular to the rotation axis (R) of the second framework means (53) and coaxial with the column means (33).

3. Machine according to claim 2 **characterized in that** the column means (33) is equipped with a first portion (59) having its first end (35) fixed to the second jaw means (15), such first portion (59) freely rotates around its own axis in a tubular seat (61) of the column means (33), such tubular seat (61) is fixed to a second portion (63) of the column means (33) aligned with the first one (59) and having the second end (43) of the second column means (33) itself; the slide seat means (31) is tubular-shaped, it slidingly houses the first (59) and second (63) portions and the tubular seat (61) of the column means (33), and it is fixed to the second framework means (53); the slide seat means (31) and the tubular seat (61) are equipped with anti-mutual rotation sliding means (65).

4. Machine according to claim 1 **characterized in that** the activation means (71) comprises a linear third cam means (91) facing the second cam means (81) and protruding from both ends of the latter (81), such third cam means (91) is assigned to match with third rolling means (93) fixed to the block means (37) and counterposed to the first rolling means (85) to counteract and balance the matching force between such first rolling means (85) and the second cam means (81).

5. Machine according to claim 4, **characterized in that** the rotation axes of the first rolling means (85) and of the third rolling means (93) are parallel to the column means (33), and the rotation axes of the second rolling means (87) are perpendicular to the column means (33).

6. Machine according to claim 5, **characterized in that** the mouth (75) of the first cam means (73) has a front portion having a width sufficient to house the second rolling means (87) in any condition of adjustment and is centrally hinged to a framework of the activation means (71), the rear portion of the mouth (75) is articulated to the front end of the adjustment segment (77) which is connected to said framework by means of actuator adjustment means approaching and leaving the pliers means,; such mouth and adjustment segment are equipped with protruding longitudinal edges parallel to the rotation axis of the second rolling means (87) and inclined or perpendicular to the column means (33) and assigned to match with and act on the latter second rolling means (87); the second cam means (81) and the third cam means (91) have respective rolling surfaces matching with the first rolling means (85) and with third rolling means (93) wherein such surfaces are parallel to the rotation axes of the rolling means, first (85) and third (93).

7. Machine according to any of the claims 5 - 7 **characterized in that** the cam means, first (73), second (81) and third (91), are connected to the framework of the activation means (71) by means of lateral movement means assigned to translate such cam means (73, 81, 91) to place them in engagement and disengagement conditions with the rolling means, respectively second (87) first (85) and third (93), for the adjustment and for the normal operation of the machine.

8. Machine according to claim 1, **characterized in that** the second framework means (53) has a set of orientation rolling means (91, 93) with respective rotation axes parallel to the rotation axis (R) of the second framework means (53), and the device (1) is provided with a set of rail means (95, 97) assigned to match with the orientation rolling means (91, 93) of the support (3) translating upstream of the activation means (71) to rotate the second framework means (53) until the first rolling means (85) and the second rolling means (87) are aligned with the first cam means (73) and with the second cam means (81).

9. Machine according to claim 2 or to claim 2 and any of the claims 3 - 8, **characterized in that** the jaw means, first (13) and second (15), comprise at least one among: set of rigid rectilinear guides (101) rigidly fixed to the first framework means (47) or to a plane of the second jaw means (15); set of hanging rectilinear guides (103) elastically fixed to the first framework means (47) or to a plane of the second jaw means (15); set of wheel means (105) fixed to the first framework means (47) or to a plane of the second jaws means (15); wherein in the operative condition in which the support (3) has a respective die means (21) such guides (101, 103) and such wheel means (105) define the planes of the first (13) and second (15) jaw means virtually coinciding with the planes of the main faces of the die means (21).

## Patentansprüche

1. Formmaschine mit einer Einstellvorrichtung (1), die zugeordnet ist, um die Verwendung von Matrizen unterschiedlicher Dicke zu ermöglichen, wobei die Maschine zumindest einen Förderer für eine Mehrzahl von Trägern (3) umfasst; jeder Träger (3) ist mit Zangenmitteln ausgestattet, die mindestens mit einem ersten Backenmittel (13) und mit einem zweiten Backenmittel (15) versehen sind, die beide flach sind oder jeweilige Ebenen definieren, die einander zugewandt sind und parallel zueinander verlaufen und zugeordnet sind, sich an entsprechende Hauptflächen (17, 19) mindestens eines Matrizenmittels (21) mit einer vorgegebenen Dicke (a, b) anzupassen und diese zu klemmen; die Einstellvorrichtung (1) umfasst für jeden Träger (3) zumindest:
- ein Gleitsitzmittel (31), das an dem Träger (3) selbst befestigt ist und dem axialen Gleiten eines entsprechenden Säulenmittels (33) zugeordnet ist, das geradlinig und senkrecht zu der Ebene eines entsprechenden zweiten Backenmittels (15) angeordnet ist, an dem sein erstes Ende (35) befestigt ist;
- ein umkehrbares Blockiermittel (37), das an dem Gleitsitzmittel (31) befestigt ist und mit einem Teil des Säulenmittels (33) in Eingriff steht;
die Maschine umfasst außerdem einen Entriegelungsantrieb (39) des Blockiermittels (37), um das Gleiten des Säulenmittels (33) entlang des Gleitsitzmittels (31) zu verriegeln oder zu entriegeln,
wobei das erste Backenmittel (13) an dem Träger (3) befestigt ist und das zweite Ende (43) des Säulenmittels (33), das seinem ersten Ende (35) gegenüberliegt, aus dem Gleitsitzmittel (31) und dem Blockiermittel (37) nach außen vorsteht; so dass in einem Einstellzustand, in dem der Träger (3) frei von dem Matrizenmittel (21) ist und der Entriegelungsantrieb (39) betätigt wird, um das Gleiten des Säulenmittels (33) entlang des Blockiermittels (37) und des Gleitsitzmittels (31) zu ermöglichen, das Säulenmittel (33) axial verschoben werden kann, um das zweite Backenmittel (15) zu bewegen und so den Abstand zwischen dem zweiten Backenmittel (15) und dem ersten Backenmittel (13) einzustellen, bis ein Abstand zwischen den Backenmitteln (13, 15) erreicht ist, der der Dicke (b, a) der neuen Größe des Matrizenmittels (21) entspricht, und bis dieser Abstand durch Betätigung des Entriegelungsantriebs (39) festgelegt wird indem der Entriegelungsantrieb (39) betätigt wird, um das Säulenmittel (33) mittels des Blockiermittels (37) zu verriegeln, wobei die Vorrichtung (1) stromabwärts eines Bereichs des Förderers zum Entladen des Matrizenmittels (21) und stromaufwärts eines Bereichs zum Einführen des Matrizenmittels (21), innerhalb des Zangenmittels jedes Trägers (3), ein Aktivierungsmittel (71) für das Säulenmittel (33) und ein Blockiermittel (37) jedes Trägers (3) umfasst,
wobei ein solches Aktivierungsmittel (71) zumindest ein erstes Nockenmittel (73) umfasst, das mit einer Mündung (75) ausgestattet ist, die mit einem linearen Einstellsegment (77) verbunden ist, das sich stromabwärts der Mündung (75) befindet, parallel zu dem Pfad des Förderers angeordnet und bewegbar ist, während es sich diesem Pfad nähert und ihn verlässt;
und es umfasst ein zweites lineares Nockenmittel (81), das sich parallel zu diesem Pfad erstreckt und dessen vorderes und hinteres betriebsfähiges Ende den entsprechenden Enden des ersten Nockenmittels (73) in Bezug auf die Bewegung des Trägers (3) entlang des Förderers vorangeht; wobei in einem Einstellzustand das zweite Nockenmittel (81) zugeordnet ist, um mit einem ersten Rollmittel (85) des Entriegelungsantriebs (39) des Blockiermittels (37) eines laufenden Trägers (3) zusammenzupassen, um das jeweilige Säulenmittel (33) zu entriegeln;
die Mündung und das Einstellsegment des ersten Nockenmittels (73) sind zugeordnet, um mit einem zweiten Rollmittel (87) zusammenzupassen, das an dem zweiten Ende (43) des Säulenmittels (33) des beweglichen Trägers befestigt ist, um das zweite Backenmittel (15) in einem Abstand von dem ersten Backenmittel (13) zu verschieben, der der Dicke (a, b) eines Matrizenmittels (21) einer gewünschten Größe entspricht; das Lösen des ersten Rollmittels (85) von dem zweiten Nockenmittel (81) verriegelt das Säulenmittel (33) durch Fixieren des Säulenmittels (33) auf die gewünschte Dicke.

2. Die Maschine gemäß Anspruch 1, **dadurch gekennzeichnet dass** der Träger (3) zumindest ein erstes Gerüstmittel (47) umfasst, an dem das erste Backenmittel (13) befestigt ist, und dass das Gerüstmittel (47) mit einem Satz von Gleitmitteln (49) ausgestattet ist, die sich parallel zu den Säulenmitteln (33) erstrecken und dem Gleiten von Verbindungen des zweiten Backenmittels (15) zugeordnet sind; dieses Trägermittel (3) umfasst ein zweites Gerüstmittel (53), das sich um eine jeweilige Drehachse (R) drehen kann, und das zweite Gerüstmittel (53) umfasst das erste Gerüstmittel (47), mit dem es zumindest über einen Zwischendrehschaft (55) verbunden ist, der sich senkrecht zu der Drehachse (R) des zweiten Gerüstmittels (53) und koaxial zu den Säulenmitteln (33) erstreckt.

3. Die Maschine gemäß Anspruch 2, **dadurch gekennzeichnet, dass** das Säulenmittel (33) mit einem ersten Bereich (59) ausgestattet ist, dessen erstes Ende (35) an dem zweiten Backenmittel (15) befestigt ist, und dieser erste Bereich (59) dreht sich frei um seine eigene Achse in einem rohrförmigen Sitz (61) des Säulenmittels (33), und dieser rohrförmige Sitz (61) ist an einem zweiten Bereich (63) des Säulenmittels (33) befestigt, der mit dem ersten Bereich (59) ausgerichtet ist und das zweite Ende (43) des zweiten Säulenmittels (33) selbst aufweist; das Gleitsitzmittel (31) ist rohrförmig, es nimmt den ersten (59) und den zweiten Bereich (63) und den rohrförmigen Sitz (61) des Säulenmittels (33) gleitend auf und ist an dem zweiten Gerüstmittel (53) befestigt; das Gleitsitzmittel (31) und der rohrförmige Sitz (61) sind mit gegenläufigen Drehgleitmitteln (65) ausgestattet.

4. Die Maschine gemäß Anspruch 1, **dadurch gekennzeichnet dass** das Betätigungsmittel (71) ein drittes lineares Nockenmittel (91) umfasst, das dem zweiten Nockenmittel (81) zugewandt ist und aus den beiden Enden des zweiten Nockenmittels (81) vorsteht, und dieses dritte Nockenmittel (91) ist zugeordnet, um mit einem dritten Rollmittel (93) zusammenzupassen, das an dem Blockiermittel (37) befestigt ist und dem ersten Rollmittel (85) entgegengestellt ist, um der Passungskraft zwischen dem ersten Rollmittel (85) und dem zweiten Nockenmittel (81) entgegenzuwirken und diese auszugleichen.

5. Die Maschine gemäß Anspruch 4, **dadurch gekennzeichnet, dass** die Drehachsen des ersten Rollmittels (85) und des dritten Rollmittels (93) sich parallel zu dem Säulenmittel (33) erstrecken, und die Drehachsen des zweiten Rollmittels (87) sich senkrecht zu dem Säulenmittel (33) erstrecken.

6. Die Maschine gemäß Anspruch 5, **dadurch gekennzeichnet, dass** die Mündung (75) des ersten Nockenmittels (73) einen vorderen Bereich mit einer Breite aufweist, die ausreichend ist, um das zweite Rollmittel (87) in jedem Zustand der Einstellung aufzunehmen, und zentral an einem Gerüst des Aktivierungsmittels (71) angelenkt ist, wobei der hintere Bereich der Mündung (75) an dem vordere Ende des Einstellsegments (77) gelenkartig befestigt ist, das mit dem Gerüst mittels eines Stellglied-Einstellmittels verbunden ist, das sich dem Zangenmittel nähert und sich von diesem entfernt; die Mündung und das Einstellsegment sind mit vorstehenden Längskanten versehen, die sich parallel zu der Drehachse des zweiten Rollmittels (87) erstrecken und zu dem Säulenmittel (33) geneigt oder senkrecht angeordnet sind und zugeordnet sind, um mit dem zweiten Rollmittel (87) zusammenzupassen und auf dieses zu wirken; das zweite Nockenmittel (81) und das dritte Nockenmittel (91) weisen jeweils Rollflächen auf, die mit dem ersten Rollmittel (85) und mit dem dritten Rollmittel (93) zusammenpassen, wobei diese Flächen sich parallel zu den Drehachsen des ersten (85) und des dritten Rollmittels (93) erstrecken.

7. Die Maschine gemäß einem der Ansprüche 5-7, **dadurch gekennzeichnet, dass** das erste (73), zweite (81) und dritte Nockenmittel (91) mit dem Gerüst des Betätigungsmittels (71) mittels seitlicher Bewegungsmittel verbunden ist, die dazu bestimmt sind, diese Nockenmittel (73, 81, 91) zu verschieben, um sie jeweils mit dem zweiten (87), ersten (85) und dritten Rollmittel (93) für die Einstellung und den normalen Betrieb der Maschine in einen Zustand des Eingriffs und des Nicht-Eingriffs bzw. Lösens zu bringen.

8. Die Maschine gemäß Anspruch 1, **dadurch gekennzeichnet dass** das zweite Gerüstmittel (53) einen Satz von Ausrichtungsrollmitteln (91, 93) mit jeweiligen Drehachsen parallel zu der Drehachse (R) des zweiten Gerüstmittels (53) aufweist, und die Vorrichtung (1) ist mit einem Satz von Schienenmitteln (95, 97) ausgestattet, die zugeordnet sind, um mit den Ausrichtungsrollmitteln (91, 93) des Trägers (3) zusammenzupassen, die sich stromaufwärts des Betätigungsmittels (71) verschieben, um das zweite Gerüstmittel (53) zu drehen, bis das erste Rollmittel (85) und das zweite Rollmittel (87) mit dem ersten Nockenmittel (73) und dem zweiten Nockenmittel (81) ausgerichtet sind.

9. Die Maschine gemäß Anspruch 2 oder gemäß Anspruch 2 und einem der Ansprüche 3-8 , **dadurch gekennzeichnet, dass** das erste (13) und das zweite Backenmittel (15) zumindest eines der Folgenden umfassen: einen Satz starrer geradliniger Führungen (101), die starr an dem ersten Gerüstmittel (47) oder an einer Ebene des zweiten Backenmittels (15) befestigt sind; einen Satz hängender geradliniger Führungen (103), die elastisch an dem ersten Gerüstmittel (47) oder an einer Ebene des zweiten Backenmittels (15) befestigt sind; einen Satz Radmittel (105), die an dem ersten Gerüstmittel (47) oder an einer Ebene des zweiten Backenmittels (15) befestigt sind; wobei in dem Betriebszustand, in dem der Träger (3) ein entsprechendes Matrizenmittel (21) aufweist, die Führungen (101, 103) und das Radmittel (105) die Ebenen des ersten (13) und des zweiten Backenmittels (15) definieren, die im Wesentlichen mit den Ebenen der Hauptflächen des Matrizenmittels (21) übereinstimmen.

## Revendications

1. Machine de moulage avec un dispositif de réglage (1) destiné à permettre l'utilisation de matrices de différentes épaisseurs, ladite machine comprenant au moins un transporteur pour une pluralité de supports (3), chaque support (3) est équipé de moyens de pince comportant au moins un premier moyen de mâchoire (13) et un second moyen de mâchoire (15), tous deux plats ou définissant des plans respectifs, se faisant mutuellement face et parallèles l'un à l'autre, et destinés à être mis en correspondance avec, et serrer, des faces principales correspondantes (17, 19) d'au moins un moyen de matrice (21) ayant une épaisseur prédéterminée (a, b) ; le dispositif de réglage (1) comprenant, pour chaque support (3), au moins :
- un moyen de siège coulissant (31) fixé au support (3) lui-même et destiné au coulissement axial d'un moyen de colonne respectif (33) qui est rectiligne et perpendiculaire au plan d'un second moyen de mâchoire correspondant (15) auquel sa première extrémité (35) est fixée ;
- un moyen de blocage réversible (37) fixé au moyen de siège coulissant (31) et engagé par une partie du moyen de colonne (33) ;
ladite machine comprenant en outre un entraînement de déverrouillage (39) du moyen de blocage (37) pour verrouiller ou déverrouiller le coulissement dudit moyen de colonne (33) le long du moyen de siège coulissant (31), le premier moyen de mâchoire (13) étant fixé au support (3) et la seconde extrémité (43) du moyen de colonne (33), opposée à sa première extrémité (35), faisant saillie à l'extérieur du moyen de siège coulissant (31) et du moyen de blocage (37) ; de telle sorte que dans un état de réglage, dans lequel le support (3) est dépourvu du moyen de matrice (21) et l'entraînement de déverrouillage (39) est actionné pour permettre le coulissement du moyen de colonne (33) le long du moyen de blocage (37) et du moyen de siège coulissant (31), le moyen de colonne (33) peut être déplacé axialement en translation pour déplacer le second moyen de mâchoire (15), réglant ainsi la distance entre ce dernier (15) et le premier moyen de mâchoire (13) jusqu'à ce qu'une distance entre eux (13, 15) soit atteinte, laquelle correspond à l'épaisseur (b, a) de la nouvelle taille du moyen de matrice (21), et jusqu'à ce que ladite distance soit rendue fixe par actionnement de l'entraînement de déverrouillage (39) pour verrouiller le moyen de colonne (33) à l'aide du moyen de blocage (37), le dispositif (1) comprenant, en aval d'une zone du transporteur pour le déchargement du moyen de matrice (31) et en amont d'une zone pour l'introduction du moyen de matrice (21), à l'intérieur des moyens de pince de chaque support (3), un moyen d'activation (71) pour le moyen de colonne (33), et un moyen de blocage (37) de chaque support (3), ledit moyen d'activation (71) comprenant au moins un premier moyen de came (73) équipé d'une ouverture (75), reliée à un segment de réglage linéaire (77) situé en aval de l'ouverture (75), parallèle au trajet du transporteur et mobile tout en s'approchant et s'éloignant dudit trajet ; et comprenant un deuxième moyen de came linéaire (81) parallèle audit trajet et dont les extrémités avant et arrière fonctionnelles précèdent les extrémités correspondantes du premier moyen de came (73) par rapport au mouvement des supports (3) le long du transporteur ; dans un état de réglage, le deuxième moyen de came (81) étant destiné à être mis en correspondance avec un premier moyen de roulement (85) de l'entraînement de déverrouillage (39) du moyen de blocage (37) d'un support en déplacement (3) pour déverrouiller le moyen de colonne respectif (33) ; l'ouverture et le segment de réglage du premier moyen de came (73) étant destinés à être mis en correspondance avec un deuxième moyen de roulement (87) fixé à la seconde extrémité (43) du moyen de colonne (33) du support en déplacement pour déplacer en translation le second moyen de mâchoire (15) à une distance du premier (13), qui correspond à l'épaisseur (a, b) d'un moyen de matrice d'une taille souhaitée (21) ; la séparation du premier moyen de roulement (85) vis-à-vis du deuxième moyen de came (81) verrouillant le moyen de colonne (33) en fixant celui-ci à l'épaisseur souhaitée.

2. Machine selon la revendication 1, **caractérisée par le fait que** le support (3) comprend au moins un premier moyen de cadre (47) auquel le premier moyen de mâchoire (13) est fixé, et il (47) est équipé d'un ensemble de moyens de coulissement (49) parallèles au moyen de colonne (33) et destinés au coulissement de liaisons du second moyen de mâchoire (15) ; ledit moyen de support (3) comprend un second moyen de cadre (53) qui peut tourner autour d'un axe de rotation respectif (R) et il (53) contient le premier moyen de cadre (47) auquel il est relié au moins à l'aide d'un arbre de rotation intermédiaire (55) perpendiculaire à l'axe de rotation (R) du second moyen de cadre (53) et coaxial au moyen de colonne (33).

3. Machine selon la revendication 2, **caractérisée par le fait que** le moyen de colonne (33) est équipé d'une première partie (59) ayant sa première extrémité (35) fixée au second moyen de mâchoire (15), ladite première partie (59) tourne librement autour de son propre axe dans un siège tubulaire (61) du moyen de colonne (33), ledit siège tubulaire (61) est fixé à une seconde partie (63) du moyen de colonne (33) alignée avec la première (59) et ayant la seconde extrémité (43) du second moyen de colonne (33) lui-même ; le moyen de siège coulissant (31) est de forme tubulaire, il reçoit de manière coulissante les première (59) et seconde (63) parties et le siège tubulaire (61) du moyen de colonne (33), et il est fixé au second moyen de cadre (53) ; le moyen de siège coulissant (31) et le siège tubulaire (61) sont équipés de moyens de coulissement anti-rotation mutuelle (65).

4. Machine selon la revendication 1, **caractérisée par le fait que** le moyen d'activation (71) comprend un troisième moyen de came linéaire (91) faisant face au deuxième moyen de came (81) et faisant saillie depuis les deux extrémités de ce dernier (81), ledit troisième moyen de came (91) est destiné à être mis en correspondance avec un troisième moyen de roulement (93) fixé au moyen de blocage (37) et opposé au premier moyen de roulement (85) pour contrer et équilibrer la force de correspondance entre ledit premier moyen de roulement (85) et le deuxième moyen de came (81).

5. Machine selon la revendication 4, **caractérisée par le fait que** les axes de rotation du premier moyen de roulement (85) et du troisième moyen de roulement (93) sont parallèles au moyen de colonne (33), et les axes de rotation du deuxième moyen de roulement (87) sont perpendiculaires au moyen de colonne (33).

6. Machine selon la revendication 5, **caractérisée par le fait que** l'ouverture (75) du premier moyen de came (73) a une partie avant ayant une largeur suffisante pour recevoir le deuxième moyen de roulement (87) dans un état quelconque de réglage et est articulée de manière centrale à un cadre du moyen d'activation (71), la partie arrière de l'ouverture (75) est articulée à l'extrémité avant du segment de réglage (77) qui est reliée audit cadre à l'aide d'un moyen de réglage d'actionneur s'approchant et s'éloignant des moyens de pince ; ladite ouverture et ledit segment de réglage sont équipés de bords longitudinaux en saillie parallèles à l'axe de rotation du deuxième moyen de roulement (87) et inclinés ou perpendiculaires au moyen de colonne (33) et destinés à être mis en correspondance avec et agir sur ce dernier deuxième moyen de roulement (87) ; le deuxième moyen de came (81) et le troisième moyen de came (91) ont des surfaces de roulement respectives mises en correspondance avec le premier moyen de roulement (85) et avec le troisième moyen de roulement (93), lesdites surfaces étant parallèles aux axes de rotation des premier (85) et troisième (93) moyens de roulement.

7. Machine selon l'une quelconque des revendications 5 à 7, **caractérisée par le fait que** les premier (73), deuxième (81) et troisième (91) moyens de came sont reliés au cadre du moyen d'activation (71) à l'aide d'un moyen de mouvement latéral destiné à déplacer en translation lesdits moyens de came (73, 81, 91) pour les placer dans des états d'engagement et de désengagement vis-à-vis des deuxième (87), premier (85) et troisième (93) moyens de roulement, respectivement, pour le réglage et pour le fonctionnement normal de la machine.

8. Machine selon la revendication 1, **caractérisée par le fait que** le second moyen de cadre (53) a un ensemble de moyens de roulement d'orientation (91, 93) ayant des axes de rotation respectifs parallèles à l'axe de rotation (R) du second moyen de cadre (53), et le dispositif (1) comporte un ensemble de moyens de rail (95, 97) destinés à être mis en correspondance avec les moyens de roulement d'orientation (91, 93) du support (3) se déplaçant en translation en amont du moyen d'activation (71) pour faire tourner le second moyen de cadre (53) jusqu'à ce que le premier moyen de roulement (85) et le deuxième moyen de roulement (87) soient alignés avec le premier moyen de came (73) et avec le deuxième moyen de came (81).

9. Machine selon la revendication 2 ou la revendication 2 et l'une quelconque des revendications 3 à 8, **caractérisée par le fait que** les premier (13) et second (15) moyens de mâchoire comprennent au moins un parmi : un ensemble de guides rectilignes rigides (101) fermement fixés au premier moyen de cadre (47) ou à un plan du second moyen de mâchoire (15) ; un ensemble de guides rectilignes en suspension (103) fixés élastiquement au premier moyen de cadre (47) ou à un plan du second moyen de mâchoire (15) ; un ensemble de moyens de roue (105) fixés au premier moyen de cadre (47) ou à un plan du second moyen de mâchoire (15) ; dans l'état de fonctionnement dans lequel le support (3) a un moyen de matrice respectif (21), lesdits guides (101, 103) et lesdits moyens de roue (105) définissant les plans des premier (13) et second (15) moyens de mâchoire coïncidant pratiquement avec les plans des faces principales du moyen de matrice (21).
